# EUROPÄISCHE PATENTANMELDUNG

(11) **EP 3 166 045 A1**
(43) Veröffentlichungstag der Anmeldung: **10.05.2017**
(21) Anmeldenummer: 16455003.0
(22) Anmeldetag: 19.09.2016
(51) Int. Cl.: G06K 9/20, G06T 7/55, G06K 19/16, G06K 9/28, G06K 9/32

(54) **VERFAHREN ZUR BESTIMMUNG DES RÄUMLICHEN REFLEXIONSVERHALTENS EINZELNER GEGENSTANDSPUNKTE**

(30) Priorität: 05.11.2015 AT 509412015
(71) Anmelder: AIT Austrian Institute of Technology GmbH, 1220 Wien (AT)
(72) Erfinder: Stolc, Svorad, 831 01 Bratislava (SK); Soukup, Daniel, 1020 Wien (AT)
(74) Vertreter: Wildhack & Jellinek

(57) **Zusammenfassung**

Die Erfindung betrifft ein Verfahren zur Bestimmung des räumlichen Reflexionsverhaltens einzelner Gegenstandspunkte (31, ..., 35) der Oberfläche eines Gegenstands (3), wobei
- der Gegenstand (3) gegenüber einer Bildaufnahmeeinheit (2) entlang einer Transportrichtung (T) in einer Gegenstandsebene (E) relativ bewegt und von dieser aufgenommen wird und
- der Gegenstand (3) von zumindest einer Beleuchtungseinheit (1) beleuchtet wird, die gegenüber der Bildaufnahmeeinheit (2) still steht,
- dass die Bildaufnahmeeinheit (2) über Sensorzeilen (21, ..., 25) verfügt, die normal zur Transportrichtung (T) des Gegenstands (3) angeordnet sind,
- dass für jede der Sensorzeilen (21, ..., 25) jeweils ein charakteristischer Winkel (α₁, ..., α₅) festgelegt wird, wobei der charakteristische Winkel
- dem Winkel, in dem die Beobachtungsrichtung der von der Bildaufnahmeeinheit (2) abgehenden Sehstrahlen (S₁, ..., S₅) und die Beleuchtungsrichtung der von der Beleuchtungseinheit (1) abgehenden Lichtstrahlen (L₁, ..., L₅) im Schnittpunkt in der Gegenstandsebene (E) aufeinander stehen, oder
- einem davon abgeleiteten Wert
entspricht,
- dass zu vorab vorgegebenen Zeitpunkten (t₁, ...) für jede der Sensorzeilen (21, ..., 25) jeweils ein Zeilenbild (P) erstellt wird, wobei die von derselben Gegenstandszeile (31, ..., 35) des Gegenstands (3) erstellten Zeilenbilder jeweils zu einem Teilbild zusammengesetzt werden,
- dass für jeden der aufgenommenen Gegenstandspunkte (31, ..., 35) auf dem Gegenstand (3) aus den einzelnen Teilbildern jeweils diejenigen Pixel ermittelt werden, die denselben Gegenstandspunkt (31, ..., 35) auf dem Gegenstand (3) zeigen, sodass einer Anzahl von Gegenstandspunkten (31, ..., 35) jeweils die diesen Gegenstandspunkt (31, ..., 35) darstellenden Pixel aus den einzelnen Teilbildern zugeordnet werden, und so das jeweilige Reflexionsverhalten dieser Gegenstandspunkte (31, ..., 35) durch die Werte der ihnen (31, ..., 35) zugewiesenen Pixel charakterisiert wird.

## Beschreibung

Die Erfindung betrifft ein Verfahren zur Bestimmung des räumlichen Reflexionsverhaltens von Gegenstandspunkten, dh von Punkten auf der Oberfläche von Gegenständen, gemäß dem Patentanspruch 1.

Aus dem Stand der Technik sind unterschiedliche Verfahren bekannt, mit denen Gegenstände, insbesondere Druckwerke oder Geldscheine, inspiziert werden und mit denen spezielle Reflexionseigenschaften der Gegenstände aufgenommen und geprüft werden können. Dabei besteht häufig das Problem, dass mit bekannten Aufnahmeeinrichtungen das Reflexionsverhalten der Gegenstände nur bei bestimmen Einstrahlungswinkeln auf einfache Weise inspiziert werden kann.

Aufgabe der Erfindung ist es, diesbezüglich Abhilfe zu schaffen und ein Verfahren zur Bestimmung des räumlichen Reflexionsverhaltens einzelner Punkte bereitzustellen, mit dem auf einfache Weise das Reflexionsverhalten eines Gegenstandes nach unterschiedlichen Reflexionsrichtungen rasch und sicher aufgenommen werden kann.

Die Erfindung löst diese Aufgabe mit einem Verfahren gemäß Patentanspruch 1. Bei einem solchen Verfahren zur Bestimmung des räumlichen Reflexionsverhaltens einzelner Punkte der Oberfläche eines Gegenstandes ist vorgesehen, dass
- der Gegenstand gegenüber einer Bildaufnahmeeinheit entlang einer Transportrichtung in einer Gegenstandsebene relativ bewegt und von dieser aufgenommen wird und
- der Gegenstand von zumindest einer Beleuchtungseinheit beleuchtet wird, die gegenüber der Bildaufnahmeeinheit still steht,
- dass die Bildaufnahmeeinheit über Sensorzeilen verfügt, die normal zur Transportrichtung des Gegenstands angeordnet sind,
- dass für jede der Sensorzeilen jeweils ein charakteristischer Winkel festgelegt wird, wobei der charakteristische Winkel
   - dem Winkel, in dem die Beobachtungsrichtung der von der Bildaufnahmeeinheit abgehenden Sehstrahlen und die Beleuchtungsrichtung der von der Beleuchtungseinheit abgehenden Lichtstrahlen im Schnittpunkt in der Gegenstandsebene aufeinander stehen, oder
   - einem davon abgeleiteten Wert
   entspricht,
- dass zu vorab vorgegebenen Zeitpunkten für jede der Sensorzeilen jeweils ein Zeilenbild erstellt wird, wobei die von derselben Gegenstandszeile des Gegenstands erstellten Zeilenbilder jeweils zu einem Teilbild zusammengesetzt werden,
- dass für jeden der aufgenommenen Gegenstandspunkte auf dem Gegenstand aus den einzelnen Teilbildern jeweils diejenigen Pixel ermittelt werden, die denselben Gegenstandspunkt auf dem Gegenstand zeigen, sodass einer Anzahl von Gegenstandspunkten jeweils die diesen Gegenstandspunkt darstellenden Pixel aus den einzelnen Teilbildern zugeordnet werden, und so das jeweilige Reflexionsverhalten dieser Gegenstandspunkte durch die Werte der ihnen zugewiesenen Pixel charakterisiert wird.

Hierbei ist insbesondere von Vorteil, dass mit jeder Sensorzeile das Reflexionsverhalten bei einem bestimmten und aufgrund der vorab vorgegebenen Konfiguration bekannten Winkel ermittelt werden kann.

Eine besonders einfache Erstellung eines Deskriptor-Vektors sieht vor, dass dem Gegenstandspunkt ein Deskriptor-Vektor umfassend die Intensitätswerte mehrerer Pixel zugewiesen wird, wobei die einzelnen Positionen der Intensitätswerte im Deskriptor-Vektor jeweils durch das jeweilige Teilbild festgelegt wird, von dem das Pixel stammt.

Eine besonders einfache Klassifizierung eines zu untersuchenden Gegenstands anhand eines oder mehrerer Referenzgegenstände sieht vor, dass zur Unterscheidung unterschiedlicher Arten von Eigenschaften der Oberfläche des Gegenstands, insbesondere
- des Neigungswinkels der Oberfläche des Gegenstands zur Gegenstandsebene, und/oder
- von Rückstrahleigenschaften der Oberfläche des Gegenstands, und/oder
- von Oberflächenmaterialien des Gegenstands,
   - eine Anzahl von Klassen festgelegt wird, die Arten von Eigenschaften vorgeben, wobei für jede der Klassen jeweils zumindest ein Referenzgegenstand inspiziert wird und ein Deskriptor-Vektor als Referenz-Vektor mit einem Verfahren gemäß einem der vorangehenden Ansprüche erstellt wird,
   - nach einem der vorangehenden Ansprüche ein Deskriptor-Vektor eines zu untersuchenden Gegenstands ermittelt wird und dieser Deskriptor-Vektor mit den Referenz-Vektoren der einzelnen Referenzgegenstände verglichen wird und der zu untersuchende Gegenstand abhängig von diesem Vergleich einer der Klassen zugewiesen wird.

Hierbei kann zudem vorgesehen sein, dass die Pixel im Deskriptor-Vektor in aufsteigender oder absteigender Reihenfolge des ihnen zugeordneten charakteristischen Winkels angeordnet sind und/oder auf dieselbe Weise angeordnet sind wie die Sensorzeilen in der Transportrichtung.

Eine einfache Weiterverarbeitung des Deskriptor-Vektors ist möglich, wenn jedem Intensitätswert des Deskriptor-Vektors jeweils der charakteristische Winkel der Sensorzeile desjenigen Sensorpixels zugeordnet wird, das den jeweiligen Intensitätswert ermittelt hat.

Eine einfache Bestimmung der Neigung der Oberflächenormale mittels einer einzigen Beleuchtungseinheit kann erreicht werden, indem
- für jeden Gegenstandspunkt jeweils das Pixel des Deskriptor-Vektors mit der maximalen Intensität ermittelt und für die Bestimmung des Neigungswinkels der Oberfläche des Gegenstands im Gegenstandspunkt herangezogen wird, und
- indem der Neigungswinkel der Oberfläche des Gegenstands insbesondere auf den dem Pixel mit der maximalen Intensität zugeordnete charakteristische Winkel festgelegt wird.

Eine bevorzugte Festlegung des charakteristischen Winkels, die eine einfache und unmittelbare Festlegung des Neigungswinkels ermöglicht, sieht vor, dass der charakteristische Winkel festgelegt wird als Winkel zwischen
- der Winkelsymmetralen zwischen dem jeweiligen Sehstrahl und dem Lichtstrahl im jeweiligen Gegenstandspunkt und
- einer in Bezug auf die Transportrichtung festgelegten Referenzrichtung, insbesondere der Transportrichtung selbst.

Zur bevorzugten Charakterisierung der Rückstrahleigenschaften eines Gegenstandes kann vorgesehen sein,
- dass zur Bestimmung der Rückstrahleigenschaften insbesondere eine einzige Beleuchtungseinheit verwendet wird,
- dass für jeden Gegenstandspunkt jeweils die Breite des Helligkeitsverlaufs im Bereich des Maximums über die einzelnen Pixel des Deskriptor-Vektors ermittelt wird, insbesondere dadurch, dass diese Breite festgelegt wird,
   - als die Anzahl der Pixel rund um den maximalen Intensitätswert, deren Intensität von der maximalen Intensität um weniger als eine vorgegebene maximalen Intensitätsdifferenz abweicht, oder
   - als Differenz der charakteristischen Winkel zwischen den beiden Pixeln, die den Bereich rund um den maximalen Intensitätswert begrenzen, in denen die Intensität von der maximalen Intensität um weniger als eine vorgegebenen maximalen Intensitätsdifferenz abweicht
- dass diese Breite als Maß für die Rückstrahleigenschaften herangezogen wird wobei insbesondere ein Gegenstandspunkt als umso glänzender angesehen wird, je kleiner die Breite ist.

Einfache Konfigurationen, bei denen auch die charakteristischen Winkel einfach ermittelt werden können, sehen vor,
- dass die Sehstrahlen durch einen gemeinsamen Brennpunkt oder eine Brenngerade verlaufen und die Lichtstrahlen zueinander parallel ausgerichtet sind, oder
- dass die Lichtstrahlen durch einen gemeinsamen Brennpunkt oder eine Brenngerade verlaufen und die Sehstrahlen zueinander parallel ausgerichtet sind.

Einfache Konfigurationen, bei denen Abschattungen weitestgehend vermieden werden, sehen vor,
- dass die Sehstrahlen durch einen Strahlteiler geführt werden und die Lichtstrahlen vom Strahlteiler reflektiert werden, oder
- dass Lichtstrahlen durch einen Strahlteiler geführt werden und die Sehstrahlen vom Strahlteiler reflektiert werden.

Einige Ausführungsformen der Erfindung sind im Folgenden anhand der nachstehend genannten Zeichnungsfiguren näher dargestellt.

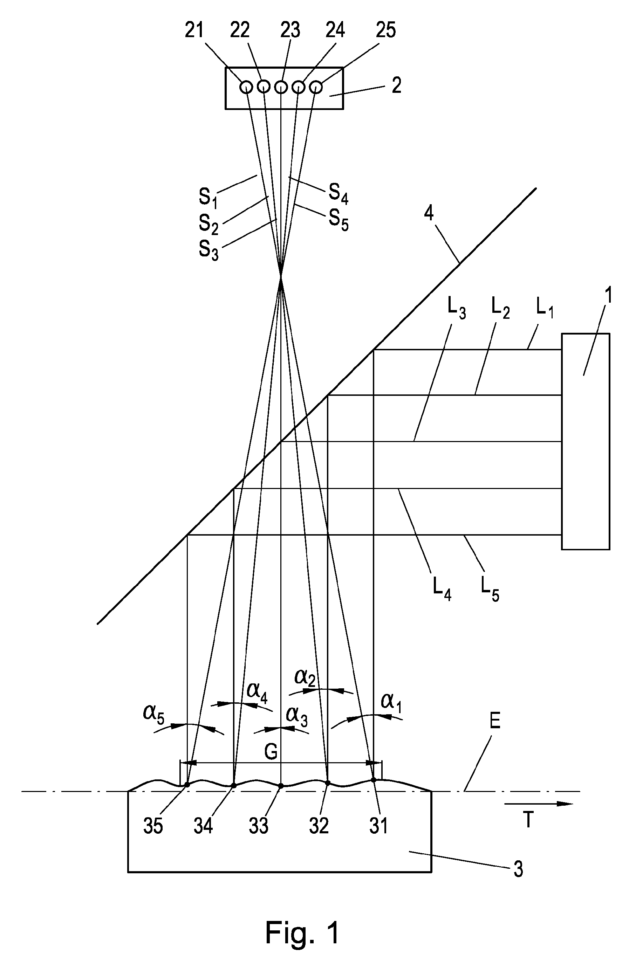

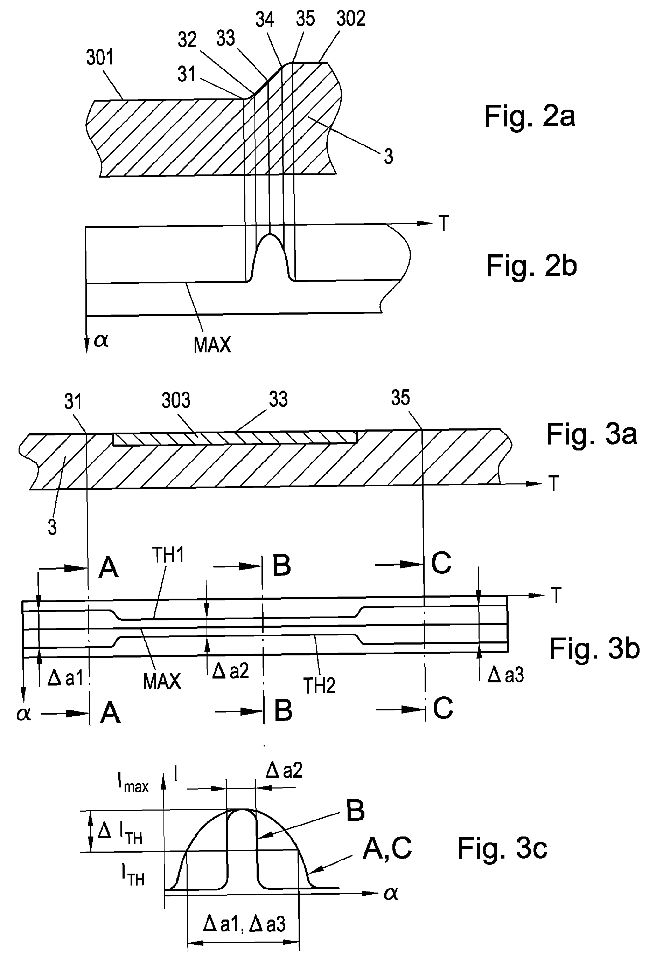

**Fig. 1** zeigt eine erste Ausführungsform der Erfindung, mit der die Rückstrahleigenschaften eines Gegenstandes ermittelt werden können. **Fig. 2a und 2b** zeigen die Ermittlung der Neigung der Oberfläche des Gegenstands in einzelnen Gegenstandspunkten. **Fig. 3a bis 3c** zeigen eine Möglichkeit zur Bestimmung des Glanzes der Oberfläche des Gegenstands in einzelnen Gegenstandspunkten.

Die in **Fig. 1** dargestellte Ausführungsform der Erfindung umfasst eine Beleuchtungseinheit 1 die auf einen Bereich G eines Gegenstands 3 ausgerichtet ist. Die Beleuchtungseinheit 1 gibt einzelne Lichtstrahlen L₁,...., L₅ auf den Gegenstand 3 ab, wobei die einzelnen von der Beleuchtungseinheit 1 abgehenden Lichtstrahlen L₁,...., L₅ zueinander parallel ausgerichtet sind.

Weiters zeigt **Fig. 1** eine Bildaufnahmeeinheit 2 dargestellt, die zur Beleuchtungseinheit 1 feststehend angeordnet ist. Die Bildaufnahmeeinheit 2 verfügt über Sensorzeilen 21, ..., 25, die normal zur Transportrichtung T des Gegenstands 3 angeordnet sind. Den einzelnen Sensorzeilen 21, ... 25 sind Sehstrahlen S₁, ..., S₅ zugeordnet, die - in ihrer Gesamtheit - auf denselben Bereich G des Gegenstands 3 gerichtet sind, der auch von den Lichtstrahlen L₁,...., L₅ beleuchtet wird.

Im vorliegenden Ausführungsbeispiel wird der Gegenstand 3 in einer Transportebene E liegend von einer nicht dargestellten Transporteinrichtung entlang einer Transportrichtung T transportiert. Die Transportebene E steht dabei bevorzugt normal zu den auf dem Gegenstand 3 eintreffenden Lichtstrahlen L₁,...., L₅. Der Gegenstand 3 weist eine im wesentlichen flache Oberfläche auf, die in der Transportebene E liegt und der Aufnahmeeinrichtung 2 bzw der Beleuchtungseinheit 1 zugewandt ist.

Zur vereinfachten Darstellung des vorliegenden Messprinzips werden fünf von der Beleuchtungseinheit 1 abgehende Lichtstrahlen L₁ bis L₅ sowie fünf Sehstrahlen S₁, ..., S₅ der Bildaufnahmeeinheit 2 näher dargestellt. Je nach Anwendungsfall kann die Beleuchtungseinheit 1 kontinuierliches Licht mit jeweils parallelen Lichtstrahlen abgeben. Die Bildaufnahmeeinheit 2 kann eine beliebige Anzahl an Sensorzeilen mit einer prinzipiell beliebigen Anzahl von einzelnen Sensorpixeln aufweisen. Typisch sind etwa Sensoren mit etwa 1000 Sensorzeilen mit jeweils 1000 Sensorpixeln, wobei etwa 10 bis 100 Sensorzeilen verwendet werden, deren Sehstrahlen untereinander jeweils einen großen Winkelabstand gemessen in Transportrichtung aufweisen.

Zu beachten ist in diesem Zusammenhang, dass in **Fig. 1** lediglich ein Schnitt durch den Gegenstand 3, die Bildaufnahmeeinheit 2 sowie die Beleuchtungseinheit 1 gezeigt ist, dh es werden nicht bloß fünf einzelne Messungen vorgenommen werden, sondern die einzelnen Sensorpixel der Zeilensensoren 21, ..., 25 der Bildaufnahmeeinheit 2 nehmen jedes für sich jeweils separat Intensitätswerte auf, der in Fig. 1 dargestellte Schnitt zeigt jedoch schematisch nur das Vorgehen bei einer Spalte. Die Sensorzeilen der Bildaufnahmeeinheit 2 stehen normal zur Transportrichtung T des Gegenstandes 3 und bevorzugt parallel zur Gegenstandsebene E. Die in dem in **Fig. 1** gezeigten Schnitt dargestellte Spalte von Sensorpixeln zeigt zur Veranschaulichung lediglich fünf Sensorpixel 21, ..., 25. Insgesamt nimmt die gesamte Bildaufnahmeeinheit 2 also bei jeder Aufnahme mit den verwendeten Zeilen jeweils Intensitätswerte auf und erstellt bei einer Aufnahme jeweils Zeilenbilder P.

Wie weiters in **Fig. 1** dargestellt, schneiden sich Lichtstrahlen L₁, ..., L₅ und Sehstrahlen S₁, ..., S₅ in der Gegenstandsebene E. Der erste Lichtstrahl L₁ sowie der erste Sehstrahl S₁ treffen einander im Gegenstandspunkt 31 des Gegenstands 3, der im Bereich G der Gegenstandsebene E liegt. Der zweite Lichtstrahl L₂ und der zweite Sehstrahl S₂ treffen einander im zweiten Gegenstandspunkt 32, usw.

Aufgrund dieser konkreten Anordnung stehen die abgehenden Lichtstrahlen L₁, ..., L₅ und die Sehstrahlen S₁, ..., S₅ bei jeder Sensorzeile 21, ..., 25 in einem anderen, für die jeweilige Sensorzeile 21, ..., 25 charakteristischen Winkel α₁, ..., α₅ zueinander. Für jede der Sensorzeilen 21, ..., 25 kann jeweils ein charakterisierender Winkel α₁, ..., α₅ festgelegt werden, der dem Winkel entspricht, in dem die Beobachtungsrichtung der von der Bildaufnahmeeinheit 2 abgehenden Sehstrahlen S₁, ..., S₅ und die Beleuchtungsrichtung der von der Beleuchtungseinheit 1 abgehenden Lichtstrahlen L₁, ..., L₅ aufeinander stehen.

Für jede Sensorzeile 21, ..., 25 kann alternativ auch ein charakteristischer Winkel α₁, ..., α₅ derart festgelegt, dass er den Winkel der Gegenstandsebene E oder einer Normalen der Gegenstandsebene E zur Winkelsymmetralen zwischen der Richtung des jeweiligen Sehstrahls S und der Richtung des Lichtstrahls L der jeweiligen Beleuchtungseinheit 1 entspricht. Eine derartige Festlegung hat den Vorteil, dass diese den Winkel der Oberfläche eines ideal reflektierenden Gegenstands 3 angibt, die den einfallenden Lichtstrahl L der Beleuchtungseinheit 1 entsprechend dem Sehstrahl S auf die Bildaufnahmeeinheit 2 ablenkt.

Daneben sind auch noch andere Festlegungen des charakteristischen Winkels möglich, in jedem Fall lässt sich ein solcher charakteristischer Winkel aus dem Winkel zwischen Sehstrahl S und Lichtstrahl L im jeweiligen Gegenstandspunkt als abgeleiteter Wert ermitteln.

Unabhängig von der jeweiligen Definition des charakteristischen Winkels, variiert der Winkel, in dem ein in einem Gegenstandspunkt 31, ..., 35 einfallender Lichtstrahl L zum Sehstrahl S steht, der auf denselben Gegenstandspunkt 31, ..., 35 gerichtet ist, je nach Position des Gegenstandspunkts 31, ..., 35 bezogen auf die Transportrichtung T. Somit steht für jeden Gegenstandspunkt 31, ..., 35, der im Rahmen der Relativbewegung des Gegenstands zur Bildaufnahmeeinheit 2 bzw zur Beleuchtungseinheit 1 entlang der Transportrichtung T beleuchtet und abgebildet wird, jeweils ein Abbild für eine Vielzahl von charakteristischen Winkeln bzw davon abgeleiteten Werten zur Verfügung, die zur Charakterisierung des Reflexionsverhaltens des Gegenstands 3 im jeweiligen Gegenstandspunkt 31, ..., 35 herangezogen werden können.

Bei der in **Fig. 1** dargestellten bevorzugten Ausführungsform werden die von der Beleuchtungseinheit 1 ausgehenden Lichtstrahlen L an einem Strahlteiler 4 reflektiert und auf einen Bereich G des Gegenstands 3 geworfen. Die Sehstrahlen der Bildaufnahmeeinheit 4 sind auf den Bereich G des Gegenstandes 3 gerichtet. Durch diese - keinesfalls notwendige - Maßnahme wird verhindert, dass die Beleuchtungseinheit 1 die Sicht der Bildaufnahmeeinheit 2 verdeckt bzw dass die Bildaufnahmeeinheit 2 die Lichtstrahlen L der Beleuchtungseinheit 1 abschattet.

Im Folgenden wird dargestellt, wie der Gegenstand 3 einerseits in der Transportrichtung T bewegt wird und andererseits laufend Abbilder des Gegenstands 3 erstellt werden. Zu vorgegebenen Zeitpunkten t₁, ... werden jeweils von allen Zeilensensoren 21, ..., 25 jeweils Zeilenbilder erstellt. Zum Zeitpunkt t₁ erstellt jeder Zeilensensor 21, ..., 25 jeweils ein Zeilenbild zu einem zweiten Zeitpunkt t₂ erstellt jeder Zeilensensor 21, ..., 25 jeweils erneut ein Zeilenbild usw. Die Aufnahmesteuerung der Zeilensensoren 21, ..., 25 ist dabei mit der - nicht dargestellten - den Gegenstand steuernden Transporteinrichtung gekoppelt.

Wird nun der Gegenstand 3 nach einer ersten Aufnahme aufgrund seiner Relativbewegung in der Gegenstandsebene E entlang der Transportrichtung T weiterbewegt, gelangt derjenige zweite Gegenstandspunkt 32, der bei der ersten Aufnahme durch den zweiten Lichtstrahl L₂ beleuchtet wurde und über den zweiten Sehstrahl S₂ abgebildet wurde in den Bereich des Schnittpunkts des ersten Lichtstrahls L₁ mit dem ersten Sehstrahl S₁. Ebenso treffen einander der zweite Lichtstrahl L₂ und der zweite Sehstrahl S₂ im dritten Gegenstandspunkt 33, der dritte Sehstrahl S₃ und der dritte Lichtstrahl L₃ im vierten Gegenstandspunkt 34 und der vierte Lichtstrahl L₄ und der vierte Sehstrahl S₄ einander im fünften Gegenstandspunkt 35. Aufgrund der unterschiedlichen Höhe des jeweiligen Gegenstandspunkts 31, ..., 35 gegenüber der Gegenstandsebene E treffen sich die Sehstrahlen bzw. Lichtstrahlen möglicherweise nicht exakt im jeweiligen Gegenstandspunkt 31, ..., 35, bei hinreichend flachen Oberflächen des Gegenstands 3 treffen sich die jeweiligen Sehstrahlen S und Lichtstrahlen L jedoch annähernd im jeweiligen Gegenstandspunkt 31, ..., 35, die Effekte sind jedoch in der Regel vernachlässigbar, wenn die Oberfläche des Gegenstands hinreichend flach ist.

Bewegt sich nun der Gegenstand 3 weiter entlang der Fortbewegungsrichtung T, so erhält man von jedem einzelnen Gegenstandspunkt 31, ..., 35 jeweils ein Abbild, bei dem der den jeweiligen Gegenstandspunkt 31, ..., 35 beleuchtende Lichtstrahl und der jeweilige den Gegenstandspunkt 31, ..., 35 beobachtende Sehstrahl zueinander in einem unterschiedlichen charakteristischen Winkel α₁, ..., α₅ stehen. Bei jeder Aufnahme im Zuge der Fortbewegung ist dieser charakteristische Winkel, der vorzugsweise dem Winkel zwischen der Beobachtungsrichtung des Sehstrahls S und der Beleuchtungsrichtung des Lichtstrahls L im jeweiligen Gegenstandspunkt 31, ..., 35 entspricht, unterschiedlich.

Im Gegenstandspunkt 31 bzw im Bereich rund um diesen Gegenstandspunkt 31, in dem der erste Lichtstrahl L₁ und der erste Sehstrahl S₁ einander im Bereich der Gegenstandsebene E schneiden, ist der Winkel etwa um +5° von der Normalen der Gegenstandsebene E entgegen der Fortbewegungsrichtung T geneigt.

Im Gegenstandspunkt 33 bzw im Bereich rund um diesen Gegenstandspunkt 33 ist der Winkel zwischen dem Sehstrahl S₃ und dem Lichtstrahl L₃ annähernd Null, wobei der Sehstrahl S₃ und der Lichtstrahl L₃ annähernd normal zur Gegenstandsebene 3 stehen.

Im Gegenstandspunkt 35 bzw im Bereich rund um diesen Gegenstandspunkt 35, in dem der fünfte Lichtstrahl L₅ und der fünfte Sehstrahl S₅ einander im Bereich der Gegenstandsebene E schneiden, ist der Winkel etwa um -5° von der Normalen der Gegenstandsebene E in Fortbewegungsrichtung T geneigt.

Verfolgt man nun sämtliche Aufnahmen die vom selben Gegenstandspunkt 31, ..., 35 während der Bewegung durch den Bereich G von der Aufnahmeeinheit 2 erstellt wurden, so erhält man eine Information über die Rückstrahleigenschaften eines Gegenstandspunkts 31, ..., 35 nach unterschiedlichen Richtungen, siehe beispielsweise **Fig. 2 und 3****.**

Da im vorliegenden Ausführungsbeispiel insgesamt Sensorzeilen 21, .., 25 verwendet werden, die jeweils Zeilenbilder erstellen, so können die von derselben Gegenstandszeile 31, ..., 35 erstellten Zeilenbilder zu einem Teilbild zusammengefasst werden. Für jeden der aufgenommenen Objekt- oder Gegenstandspunkte 31, ..., 35 werden aus den Teilbildern jeweils diejenigen Pixel ermittelt, die den jeweiligen Gegenstandspunkt 31, ..., 35 zeigen. Jedem Gegenstandspunkt 31, ..., 35 werden jeweils die diesen darstellenden Pixel mitsamt den darin gespeicherten Intensitätswerten zugeordnet. Das Reflexionsverhalten des jeweiligen Gegenstandspunkts 31, ..., 35 wird durch alle ihm zugeordneten Pixel bzw den darin gespeicherten Intensitätswerten repräsentiert.

Eine besonders vorteilhafte Anordnung bzw. Darstellung des Reflexionsverhaltens bzw. Anordnung der einzelnen Identitätswerte der Pixel kann erreicht werden, indem sämtliche denselben Gegenstandspunkt 31, ..., 35 darstellenden Pixel zu einem Deskriptor-Vektor zusammengefasst werden. Die Pixel werden im Deskriptor-Vektor in aufsteigender oder absteigender Reihenfolge des ihnen zugeordneten charakteristischen Winkels angeordnet. Daneben ist es auch möglich, dass die Pixel im Deskriptor-Vektor auf dieselbe Weise angeordnet werden, wie der Bildbereich der jeweiligen sie aufnehmenden Sensorzeilen 21, ..., 25 in Transportrichtung T bzw die Sensorzeilen 21, ..., 25 in der Aufnahmeeinheit 2. Darüber hinaus wird jedem Pixel des Deskriptor-Vektors jeweils auch der charakteristische Winkel α1, ..., α5 zugeordnet.

Mit einer bevorzugten Ausführungsform der Erfindung können unterschiedliche Gegenstände 3 einfach klassifiziert werden, wobei auf unterschiedliche Arten von Eigenschaften der Oberfläche des Gegenstands 3 Rücksicht genommen werden kann. Dabei handelt es sich insbesondere um
- den Neigungswinkel der Oberfläche des Gegenstands 3 zur Gegenstandsebene
- die Rückstrahleigenschaften der Oberfläche des Gegenstands 3
- die Oberflächenmaterialien des Gegenstands 3

Zur einfachen Unterscheidung wird eine Anzahl von Klassen festgelegt, die jeweils Arten von zu berücksichtigenden Eigenschaften vorgeben. Für jede der Klassen wird jeweils zumindest ein Referenzgegenstand inspiziert. Von zumindest einem Gegenstandspunkt auf dem Referenzgegenstand wird gemäß dem vorstehend genannten Verfahren jeweils ein Deskriptor-Vektor als Referenz-Vektor erstellt.

Anschließend wird ein zu untersuchender Gegenstand 3 inspiziert, wobei insbesondere derselbe Gegenstandspunkt oder dieselben Gegenstandspunkte inspiziert werden wie beim Referenzgegenstand. Nach der Ermittlung eines Deskriptor-Vektors bei dem zu untersuchenden Gegenstand 3 wird der Deskriptor-Vektor mit den Reverenz-Vektoren verglichen und der zu untersuchende Gegenstand 3 abhängig von diesem Vergleich einer der Klassen zugewiesen.

In **Fig. 2a und 2b** ist ein bevorzugtes Vorgehen dargestellt, mit dem der Oberflächenverlauf eines annähernd flachen Gegenstands 3 ermittelt werden kann. Zur Bestimmung der Neigung der Oberflächennormale des Gegenstands 3 wird bei diesem Ausführungsbeispiel eine einzige Beleuchtungseinheit 1 verwendet.

Für jeden Gegenstandspunkt, in dem die Neigung ermittelt werden soll, wird jeweils das Pixel des Deskriptor-Vektors V mit der maximalen Intensität Iₘₐₓ unter den ihm zugewiesenen Pixeln ermittelt. Dieses Pixel mit maximaler Intensität wird für die Bestimmung des Neigungswinkels der Oberfläche des Gegenstands 3 im Gegenstandspunkt 31, ..., 35 herangezogen. Anschließend wird der Neigungswinkel der Oberfläche des Gegenstands 3 auf den dem Pixel mit der maximalen Intensität zugeordneten charakteristischen Winkel α₁,..., α₅ festgelegt.

Ist in einer Anzahl von aneinander grenzenden Gegenstandspunkten jeweils der charakteristische Winkel α₁, ..., α₅ bzw die Neigung der Oberfläche des Gegenstands 3 bekannt, kann der Verlauf bzw ein Höhenprofil der Oberfläche des Gegenstands 3 erstellt werden.

**Fig. 2a** zeigt einen zu untersuchenden Gegenstand 3 mit einem Oberflächenverlauf mit einem höher liegenden Teilbereich 302 und einem tiefer liegenden Teilbereich 301. Die der Betrachtung zu Grunde liegenden Gegenstandspunkte 31, ..., 35 sind im Übergangsbereich zwischen den beiden Teilbereichen 301, 302 angeordnet.

Die Abbildung der **Fig. 2b** zeigt eine spezielle Darstellung der einzelnen Deskriptor-Vektoren der Gegenstandspunkte 31, ..., 35 sowie anderer Punkte auf der Oberfläche des Gegenstands 3. Die horizontale Achse entspricht der Ausdehnung des Gegenstands 3 in Transportrichtung T. Die vertikale Achse stellt die einzelnen Elemente der Deskriptor-Vektoren dar, wobei jedes Element der einzelnen Deskriptor-Vektoren jeweils einem charakteristischen Winkel zugeordnet ist. Dieser charakteristische Winkel ist auf der vertikalen Achse aufgetragen.

In der in **Fig. 2b** dargestellten Kurve MAX sind jeweils die einzelnen den jeweiligen Gegenstandspunkten 31, ..., 35 des Gegenstands 3 zugeordneten Deskriptor-Vektoren dargestellt, wobei in dem Abbild nur dasjenige Pixel mit der maximalen Intensität Iₘₐₓ unter allen Pixeln desselben Gegenstandspunkts markiert ist, woraus sich letztlich der Kurvenverlauf der Kurve MAX ergibt. Anstelle der Festlegung des Winkels als der charakteristische Winkel desjenigen Pixels mit der maximalen Intensität Iₘₐₓ kann durch Interpolation ein Zwischenwert ermittelt werden, beispielsweise ein gewichteter Mittelwert der Winkel der beiden benachbarten Pixel mit den größten Intensitäten. Die Gewichtung kann beispielsweise aufgrund der den Pixeln zugeordneten Intensitäten erfolgen.

In den **Fig. 3a bis 3c** ist ein Vorgehen zur Bestimmung der Rückstrahleigenschaften einzelner Gegenstandspunkte 31, 33, 35 eines Gegenstands 3 dargestellt. Zur Bestimmung der Rückstrahleigenschaften wird in diesem bevorzugten Ausführungsbeispiel der Erfindung eine einzige Beleuchtungseinheit 1 verwendet.

Für jeden Gegenstandspunkt 31, ..., 35 kann zur Bestimmung des Glanzes jeweils die Breite des Helligkeitsverlaufs im Bereich Δa des Maximums über die einzelnen Pixel des Deskriptor-Vektors V ermittelt werden.

Die Breite Δa im Bereich des Maximums kann auf unterschiedliche Weise festgelegt werden. So ist es beispielsweise möglich, die Breite als die Anzahl der Pixel rund um den maximalen Intensitätswert Iₘₐₓ festzulegen, deren Intensität von der maximalen Intensität Iₘₐₓ um weniger als eine vorgegebene maximale Intensitätsdifferenz ΔI_{TH} abweicht. Diese vorgegebene maximale Intensitätsdifferenz ΔI_{TH} kann beispielsweise auf 25% des maximalen Intensitätswerts Iₘₐₓ festgelegt werden. Es wird damit ein Intensitätsschwellenwert I_{TH} auf 75% des maximalen Intensitätswerts festgelegt Iₘₐₓ. Sämtliche Pixel, in der Umgebung des Pixels mit dem maximalen Intensitätswert, deren zugewiesener Intensitätswert oberhalb des Intensitätsschwellenwerts I_{TH} liegt, werden zum Bereich des Maximums gerechnet.

Alternativ kann die Breite, wie in **Fig. 3c** dargestellt, als Differenz der charakteristischen Winkel α₁, ..., α₅ zwischen den beiden Pixeln festgelegt werden, die den Bereich rund um den maximalen Intensitätswert Iₘₐₓ begrenzen, in denen die Intensität von der maximalen Intensität Iₘₐₓ um weniger als eine vorgegebene maximale Intensitätsdifferenz ΔI_{TH} abweicht. Die maximale Intensitätsdifferenz ΔI_{TH} bzw der Intensitätsschwellenwert können wie bei der vorstehend genannten Variante festgelegt werden.

Diese so ermittelte Breite Δa kann als Maß für die Rückstrahleigenschaften des jeweiligen Gegenstandspunkts 31, ..., 35 herangezogen werden, wobei ein Gegenstandspunkt 31, ..., 35 als umso glänzender angesehen wird, je kleiner diese Breite Δa ist.

In **Fig. 3a** ist ein Gegenstand 3 dargestellt, der in seinem Mittelbereich der Oberfläche einen Glanzbereich 303 aufweist, im übrigen Bereich weniger glänzend ist und diffus reflektiert. In **Fig. 3b** ist analog zu **Fig. 2b** der Verlauf der maximalen Intensität Iₘₐₓ in den einzelnen Deskriptor-Vektoren V der einzelnen Gegenstandspunkte 31, ..., 35 dargestellt, die auf dem in **Fig. 3a** dargestellten Oberflächenbereich liegen. Weiters ist der Verlauf der Pixel dargestellt, in denen die Intensität I genau der Schwellenwertintensität I_{TH} entspricht bzw in denen die Intensität I von der maximalen Intensität Iₘₐₓ um die vorgegebene maximale Intensitätsdifferenz ΔI_{TH} abweicht.

Bei den Gegenstandspunkten 31, 35 ist diese Breite Δa₁, Δa₃ (Schnitte A-A, C-C) größer als im Gegenstandspunkt 33 im Glanzbereich 303, wo die Breite einen geringeren Wert Δa₂ (Schnitt B-B) aufweist. In den Gegenstandspunkten 31 und 35 ist der Gegenstand 3 matter als im Glanzbereich 303, in dem Gegenstandspunkt 33 liegt.

Neben der in **Fig. 1** dargestellten Ausführungsform können auch andere Konfigurationen von einer Beleuchtungseinheit 1 und einer Bildaufnahmeeinheit 2 verwendet werden. Es ist auch möglich, dass die Sehstrahlen S der Bildaufnahmeeinheit 2 zueinander parallel stehen und dass die Lichtstrahlen L der Beleuchtungseinheit 1 jeweils in unterschiedlichem Winkel auf den Gegenstand 3 einfallen.

## Patentansprüche

1. Verfahren zur Bestimmung des räumlichen Reflexionsverhaltens einzelner Gegenstandspunkte (31, ..., 35) der Oberfläche eines Gegenstands (3), wobei
- der Gegenstand (3) gegenüber einer Bildaufnahmeeinheit (2) entlang einer Transportrichtung (T) in einer Gegenstandsebene (E) relativ bewegt und von dieser aufgenommen wird und
- der Gegenstand (3) von zumindest einer Beleuchtungseinheit (1) beleuchtet wird, die gegenüber der Bildaufnahmeeinheit (2) still steht,
- dass die Bildaufnahmeeinheit (2) über Sensorzeilen (21, ..., 25) verfügt, die normal zur Transportrichtung (T) des Gegenstands (3) angeordnet sind,
- dass für jede der Sensorzeilen (21, ..., 25) jeweils ein charakteristischer Winkel (α₁, ..., α₅) festgelegt wird, wobei der charakteristische Winkel
- dem Winkel, in dem die Beobachtungsrichtung der von der Bildaufnahmeeinheit (2) abgehenden Sehstrahlen (S₁, ..., S₅) und die Beleuchtungsrichtung der von der Beleuchtungseinheit (1) abgehenden Lichtstrahlen (L₁, ..., L₅) im Schnittpunkt in der Gegenstandsebene (E) aufeinander stehen, oder
- einem davon abgeleiteten Wert
entspricht,
- dass zu vorab vorgegebenen Zeitpunkten (t₁, ...) für jede der Sensorzeilen (21, ..., 25) jeweils ein Zeilenbild (P) erstellt wird, wobei die von derselben Gegenstandszeile (31, ..., 35) des Gegenstands (3) erstellten Zeilenbilder jeweils zu einem Teilbild zusammengesetzt werden,
- dass für jeden der aufgenommenen Gegenstandspunkte (31, ..., 35) auf dem Gegenstand (3) aus den einzelnen Teilbildern jeweils diejenigen Pixel ermittelt werden, die denselben Gegenstandspunkt (31, ..., 35) auf dem Gegenstand (3) zeigen, sodass einer Anzahl von Gegenstandspunkten (31, ..., 35) jeweils die diesen Gegenstandspunkt (31, ..., 35) darstellenden Pixel aus den einzelnen Teilbildern zugeordnet werden, und so das jeweilige Reflexionsverhalten dieser Gegenstandspunkte (31, ..., 35) durch die Werte der ihnen (31, ..., 35) zugewiesenen Pixel charakterisiert wird.

2. Verfahren nach Anspruch 1, **dadurch gekennzeichnet, dass** dem Gegenstandspunkt (31, ..., 35) ein Deskriptor-Vektor umfassend die Intensitätswerte mehrerer Pixel zugewiesen wird, wobei die einzelnen Positionen der Intensitätswerte im Deskriptor-Vektor jeweils durch das jeweilige Teilbild festgelegt wird, von dem das Pixel stammt.

3. Verfahren nach Anspruch 2, **dadurch gekennzeichnet, dass** zur Unterscheidung unterschiedlicher Arten von Eigenschaften der Oberfläche des Gegenstands (3), insbesondere
- des Neigungswinkels der Oberfläche des Gegenstands (3) zur Gegenstandsebene (E), und/oder
- von Rückstrahleigenschaften der Oberfläche des Gegenstands (3), und/oder
- von Oberflächenmaterialien des Gegenstands (3),
- eine Anzahl von Klassen festgelegt wird, die Arten von Eigenschaften vorgeben, wobei für jede der Klassen jeweils zumindest ein Referenzgegenstand inspiziert wird und ein Deskriptor-Vektor als Referenz-Vektor mit einem Verfahren gemäß einem der vorangehenden Ansprüche erstellt wird,
- nach einem der vorangehenden Ansprüche ein Deskriptor-Vektor eines zu untersuchenden Gegenstands (3) ermittelt wird und dieser Deskriptor-Vektor mit den Referenz-Vektoren der einzelnen Referenzgegenstände verglichen wird und der zu untersuchende Gegenstand (3) abhängig von diesem Vergleich einer der Klassen zugewiesen wird.

4. Verfahren nach Anspruch 2 oder 3, **dadurch gekennzeichnet, dass** die Pixel im Deskriptor-Vektor in aufsteigender oder absteigender Reihenfolge des ihnen zugeordneten charakteristischen Winkels angeordnet sind und/oder auf dieselbe Weise angeordnet sind wie die Sensorzeilen (21, ..., 25) in der Transportrichtung (T).

5. Verfahren nach einem der Ansprüche 2 bis 4, **dadurch gekennzeichnet, dass** jedem Intensitätswert des Deskriptor-Vektors jeweils der charakteristische Winkel (α₁, ..., α₅) der Sensorzeile (21, ..., 25) desjenigen Sensorpixels zugeordnet wird, das den jeweiligen Intensitätswert ermittelt hat.

6. Verfahren nach einem der vorangehenden Ansprüche, **dadurch gekennzeichnet,**
- **dass** zur Bestimmung der Neigung der Oberflächennormale des Gegenstands (3) insbesondere eine einzige Beleuchtungseinheit (1) verwendet wird,
- **dass** für jeden Gegenstandspunkt (31, ..., 35) jeweils das Pixel des Deskriptor-Vektors mit der maximalen Intensität ermittelt und für die Bestimmung des Neigungswinkels der Oberfläche des Gegenstands (3) im Gegenstandspunkt (31, ..., 35) herangezogen wird, und
- **dass** der Neigungswinkel der Oberfläche des Gegenstands (3) insbesondere auf den dem Pixel mit der maximalen Intensität zugeordnete charakteristische Winkel (α₁, ..., α₅) festgelegt wird.

7. Verfahren nach einem der vorangehenden Ansprüche, insbesondere nach Anspruch 6, **dadurch gekennzeichnet, dass** der charakteristische Winkel festgelegt wird als Winkel zwischen
- der Winkelsymmetralen zwischen dem jeweiligen Sehstrahl (S) und dem Lichtstrahl (L) im jeweiligen Gegenstandspunkt (31, ..., 35) und
- einer in Bezug auf die Transportrichtung (T) festgelegten Referenzrichtung, insbesondere der Transportrichtung (T) selbst.

8. Verfahren einem der vorangehenden Ansprüche, **dadurch gekennzeichnet,**
- **dass** zur Bestimmung der Rückstrahleigenschaften insbesondere eine einzige Beleuchtungseinheit (1) verwendet wird,
- **dass** für jeden Gegenstandspunkt (31, ..., 35) jeweils die Breite des Helligkeitsverlaufs im Bereich des Maximums über die einzelnen Pixel des Deskriptor-Vektors ermittelt wird, insbesondere dadurch, dass diese Breite festgelegt wird,
- als die Anzahl der Pixel rund um den maximalen Intensitätswert (Iₘₐₓ), deren Intensität (I_{X}) von der maximalen Intensität (Iₘₐₓ) um weniger als eine vorgegebene maximalen Intensitätsdifferenz (ΔI_{TH}) abweicht, oder
- als Differenz (Δa) der charakteristischen Winkel (α₁, ..., α₅) zwischen den beiden Pixeln, die den Bereich rund um den maximalen Intensitätswert (Iₘₐₓ) begrenzen, in denen die Intensität von der maximalen Intensität (Iₘₐₓ) um weniger als eine vorgegebenen maximalen Intensitätsdifferenz (ΔI_{TH}) abweicht
- **dass** diese Breite als Maß für die Rückstrahleigenschaften herangezogen wird wobei insbesondere ein Gegenstandspunkt (31, ..., 35) als umso glänzender angesehen wird, je kleiner die Breite ist.

9. Verfahren nach einem der vorangehenden Ansprüche, **dadurch gekennzeichnet,**
- **dass** die Sehstrahlen (S₁, ..., S₅) durch einen gemeinsamen Brennpunkt oder eine Brenngerade verlaufen und die Lichtstrahlen (L₁, ..., L₅) zueinander parallel ausgerichtet sind, oder
- **dass** die Lichtstrahlen (L₁, ..., L₅) durch einen gemeinsamen Brennpunkt oder eine Brenngerade verlaufen und die Sehstrahlen (S₁, ..., S₅) zueinander parallel ausgerichtet sind.

10. Verfahren nach einem der vorangehenden Ansprüche, **dadurch gekennzeichnet,**
- **dass** die Sehstrahlen (S₁, ..., S₅) durch einen Strahlteiler (4) geführt werden und die Lichtstrahlen (L₁, ..., L₅) vom Strahlteiler (4) reflektiert werden, oder
- **dass** Lichtstrahlen (L₁, ..., L₅) durch einen Strahlteiler (4) geführt werden und die Sehstrahlen (S₁, ..., S₅) vom Strahlteiler (4) reflektiert werden.
